**Europäisches Patentamt**

**European Patent Office**

**Office européen des brevets**

(19)

(11) Veröffentlichungsnummer: **0 122 438**

**A2**

(12) # EUROPÄISCHE PATENTANMELDUNG

(21) Anmeldenummer: **84102507.5**

(22) Anmeldetag: **08.03.84**

(51) Int. Cl.³: **H 04 L 25/49**

(30) Priorität: **11.03.83 DE 3308768**

(43) Veröffentlichungstag der Anmeldung:
**24.10.84 Patentblatt 84/43**

(84) Benannte Vertragsstaaten:
**AT CH DE LI NL**

(71) Anmelder: **Siemens Aktiengesellschaft**
**Berlin und München Wittelsbacherplatz 2**
**D-8000 München 2(DE)**

(72) Erfinder: **Haass, Adolf**
**Eichelhäherstrasse 54**
**D-8000 München 60(DE)**

(54) **Empfangsschaltung für nach einem Coded-Diphase-Verfahren übertragene Datensignale.**

(57) In einer Empfangsschaltung für nach einem Coded-Diphase-Verfahren übertragene Datensignale ist ein Tiefpaßfilter (TP) vorgesehen, welches die durch einen Signalpegelübergang in der Mitte eines Codeschrittes gebildeten Signalelemente ("0") bedämpft und die durch einen übergangslosen Signalpegel während eines Codeschrittes gebildeten Signalelemente ("1") ohne Dämpfung an eine Schwellwert-Auswerteschaltung (FD1, FD2) weiterleitet, die den voneinander unterscheidbaren Ausgangspegeln des Tiefpaßfilters (TP) und damit den Binärwerten der übertragenen Datensignale entsprechende Ausgangssignale abgibt.

FIG 1

EP 0 122 438 A2

0122438

SIEMENS AKTIENGESELLSCHAFT  *1*          Unser Zeichen
Berlin und München                 VPA  83 P 1 1 3 3  E

Empfangsschaltung für nach einem Coded-Diphase-Verfahren übertragene Datensignale

Die Erfindung bezieht sich auf eine Empfangsschaltung für nach einem Coded-Diphase-Verfahren übertragene Datensignale.

Bei einem Coded-Diphase-Verfahren werden die jeweils zu übertragenden Daten so codiert, daß immer bei einem 0-Bit ein Phasensprung eines Signalelements erfolgt, während bei einem 1-Bit kein Phasensprung erfolgt (siehe das Buch "Datenübertragung", Band I, von P.Bocker, Springer-Verlag, Berlin, Heidelberg, New York, 1976, Seite 129). Durch diese Codierungsweise ist es dann empfängerseitig möglich, die 1-Bits eindeutig durch einen Polaritätswechsel zum jeweiligen Abtastzeitpunkt zu erkennen, während die 0-Bits dadurch erkannt werden, daß solche Polaritätswechsel zum jeweiligen Abtastzeitpunkt ausbleiben.

Es hat sich nun herausgestellt, daß die Gewinnung von in einem nach einem Coded-Diphase-Verfahren übertragenen Signalstrom enthaltenen binären Datensignalen einen relativ hohen schaltungstechnischen Aufwand erfordert. Darüber hinaus ist es nicht ohne weiteres möglich, eine in dem jeweils übertragenen Signalstrom enthaltene Taktinformation unzweideutig zu gewinnen.

Der Erfindung liegt demgemäß die Aufgabe zugrunde, einen Weg zu zeigen, wie mit relativ geringem schaltungstechnischem Aufwand eine Empfangsschaltung für nach einem Coded-Diphase-Verfahren übertragene Daten-

signale aufzubauen ist.

Gelöst wird die vorstehend aufgezeigte Aufgabe erfindungsgemäß dadurch, daß die Datensignale einem Tiefpaßfilter zugeführt werden, welches die durch einen Signalübergang in der Mitte eines Codeschrittes gebildeten Signalelemente bedämpft und die durch einen übergangslosen Signalpegel während eines Codeschrittes gebildeten Signalelemente ohne Dämpfung an eine Schwellwertauswerteschaltung weiterleitet, die die voneinander unterscheidbaren Ausgangspegel des Tiefpaßfilters auswertet und damit den Binärwerten der übertragenen Datensignale entsprechende Ausgangssignale abgibt.

Die Erfindung bringt den Vorteil mit sich, daß mit einem relativ geringen schaltungstechnischen Aufwand in der Empfangsschaltung für nach einem Coded-Diphase-Verfahren übertragene Datensignale ausgekommen werden kann, um die den verschiedenen Binärwerten entsprechenden Signalelemente sicher voneinander unterscheiden und auswerten zu können. Überdies bringt die Erfindung den Vorteil mit sich, daß auf relativ einfache Weise auch eine eindeutige Gewinnung der Taktinformation möglich ist, die mit den Datensignalen übertragen wird bzw. in diesen gewissermaßen enthalten ist.

Vorzugsweise ist die Schwellwert-Auswerteschaltung durch mindestens eine Fenster-Diskriminatorschaltung gebildet. Dies bringt den Vorteil eines besonders geringen analogen schaltungstechnischen Aufwands für die betreffende Auswerteschaltung mit sich.

Vorzugsweise sind jedoch die jeweils ein und demselben Binärwert der übertragenen Datensignale entsprechenden Ausgangssignale der vorgesehenen Fenster-Diskriminatoren gemäß einer ODER-Verknüpfungsfunktion zusammengefaßt.
Dies bringt den Vorteil eines besonders geringen digitalen schaltungstechnischen Aufwands für die betreffende Auswerteschaltung mit sich.

Anhand von Zeichnungen wird die Erfindung nachstehend beispielsweise näher erläutert.

Figur 1 zeigt in einem Blockschaltbild ein Ausführungsbeispiel der Empfangsschaltung gemäß der Erfindung.

Figur 2 zeigt ein Diagramm, welches zur Erläuterung der Arbeitsweise der in Figur 1 dargestellten Empfangsschaltung verwendet wird.

Figuren 3 und 4 zeigen Augendiagramme, die ebenfalls zur Erläuterung der Arbeitsweise der in Figur 1 dargestellten Empfangsschaltung herangezogen werden.

Figur 5 zeigt in einem Blockschaltbild ein weiteres Ausführungsbeispiel der Empfangsschaltung gemäß der Erfindung mit nur einem Hystereseverhalten zeigenden Fensterdiskriminator.

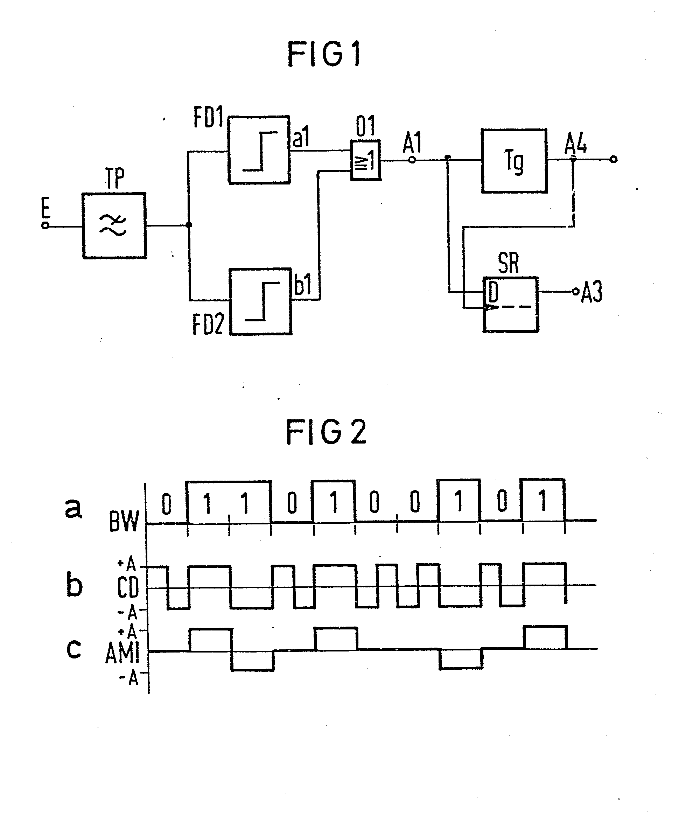

Die in Figur 1 dargestellte Empfangsschaltung weist ein an einem Eingangsanschluß E angeschlossenes Tiefpaßfilter TP auf, dem ausgangsseitig eine Schwellwert-Auswerteschaltung mit zwei Fenster-Diskriminatoren FD1 und FD2 nachgeschaltet ist. Die beiden Fenster-Diskriminatoren FD1 und FD2 sind mit jeweils einem Ausgang a1 bzw. b1 an den Eingängen eines ODER-Gliedes O1 angeschlossen. Wie noch ersichtlich werden wird, handelt es sich bei den mit den Eingängen des ODER-Gliedes O1

...denen Ausgängen der beiden Fenster-Diskriminato-ren FD1 und FD2 um solche Ausgänge, an denen jeweils bei ein und demselben Binärwert entsprechenden Signalpegeln unterschiedlicher Vorzeichen ein einem Binärsignal "1" entsprechendes Ausgangssignal auftritt.

Das ODER-Glied O1 gibt an seinem Ausgangsanschluß A1 im vorliegenden Fall Ausgangssignale ab, die jeweils kennzeichnend sind für einen Binärwert "1" der der Empfangsschaltung am Eingang E zugeführten Datensignale.

An dem Ausgang A1 der in Figur 1 dargestellten Empfangsschaltung ist eine Schieberegisterstufe SR mit seinem Daten-Eingang angeschlossen. Die Schieberegisterstufe SR gibt an einen Ausgangsanschluß A3 Ausgangssignale ab, welche den Binärwerten der übertragenen Datensignale entsprechen.

Am Ausgang A1 der in Figur 1 dargestellten Empfangsschaltung ist ferner ein Taktgenerator Tg angeschlossen, der durch die ihm eingangsseitig zugeführten Ausgangssignale des ODER-Gliedes O1 ange-steuert werden kann. Diese Ansteuerung kann eine Synchronisierung einer in diesem Taktgenerator Tg enthaltenen VCO-Schaltung sein. Der Taktgenerator Tg gibt an einen Ausgangsanschluß A4 Taktimpulse ab, die im Rhythmus der Codeschritte auftreten, in denen die binären Signalelemente "0" und "1" der betrachteten Empfangsschaltung zugeführt worden sind.

Nunmehr wird auf das in Figur 2 gezeigte Diagramm eingegangen. In der Zeile a) sind in Figur 2 Binärwerte BW
angedeutet, die der in Figur 1 dargestellten Empfangsschaltung nach einem Coded-Diphase-Verfahren zugeführt
werden sollen. Das nach diesem Coded-Diphase-Verfahren
übertragene Datensignal ist in der Zeile b) in Figur 2
mit CD angedeutet. Wie ersichtlich, tritt bei den Binärwerten "O" jeweils ein Phasensprung in der Mitte eines
Codeschrittes auf. Der Phasensprung kann dabei entweder
von einem Pegel +A zu einem Pegel -A oder von dem Pegel
-A zum Pegel +A hin erfolgen. Die Binärwerte "1" treten hingegen jeweils ohne einen Phasensprung im jeweiligen Codeschritt auf, allerdings entweder mit einem
Pegel +A" oder mit einem Pegel -A.

In der Zeile c) gemäß Figur 2 ist für die in der Zeile
a) angegebenen Binärwerte BW der zugehörige Verlauf
eines sogenannten AMI-Codes (Alternate Mark Inversion-
Code) gezeigt. Wie ersichtlich, sind in dem AMI-Code
die Binärwerte "1" jeweils durch einen Pegel +A oder
-A gekennzeichnet, während die Binärwerte "O" jeweils
durch Fehlen eines Pegels, also durch O Volt, gekennzeichnet sind.

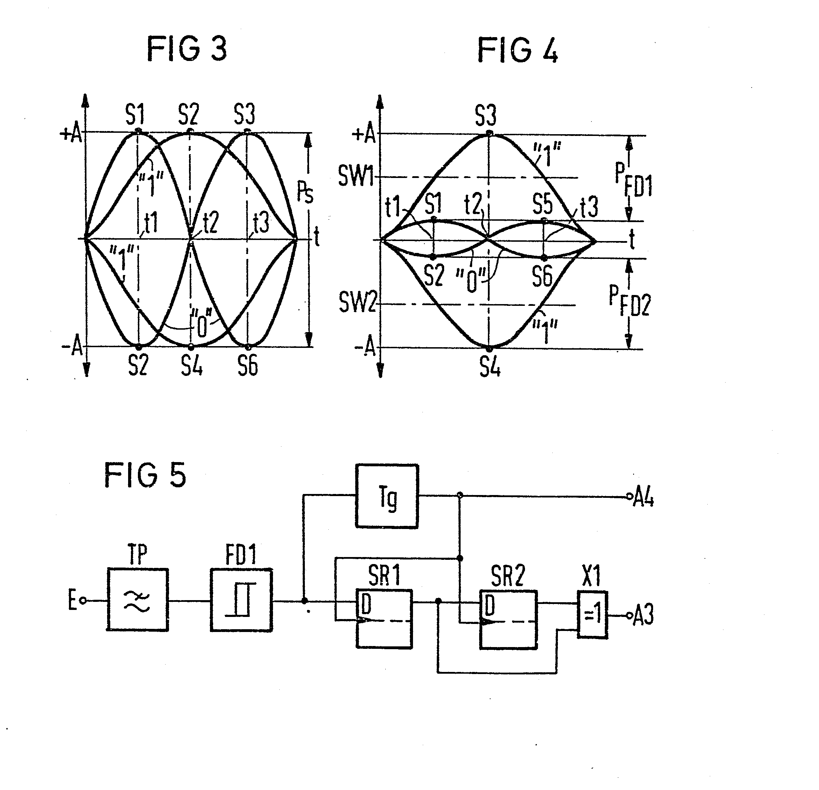

Bevor auf die in den Figuren 3 und 4 dargestellten Augendiagramme eingegangen wird, sei an dieser Stelle bezüglich der in Figur 2 dargestellten Verhältnisse angemerkt, daß die in der Zeile b) gemäß Figur 2 dargestellten Datensignale jene Datensignale sind, die dem
Eingangsanschluß E der in Figur 1 dargestellten Schaltungsanordnung zugeführt werden. Die in der Zeile c)
gemäß Figur 2 dargestellte Signalfolge ist hingegen
eine Signalfolge, wie sie praktisch am Ausgang des Tiefpaßfilters TP gemäß Figur 1 auftritt. Dabei erkennt man,
daß durch das Tiefpaßfilter TP aus der dem Eingangsanschluß E zugeführten Datensignalfolge die höherfrequenten Signalanteile weggefiltert sind, die den Binärwerten "0" entsprechen.

In Figur 3 ist in einem Augendiagramm über die Zeitachse t der Verlauf der Datensignale am Eingangsanschluß E der Schaltungsanordnung gemäß Figur 1 gezeigt. Wie ersichtlich, können die Datensignale maximal einen Pegel +A oder -A haben. Die für Binärwerte "1" kennzeichnenden Signalverläufe treten dabei mit der halben Frequenz derjenigen Frequenz auf, mit der die für Binärwerte "0" charakteristischen Datensignale auftreten. Wenn man nun diese in einem Pegelbereich Ps auftretenden Datensignale durch einfache Pegelauswertung hinsichtlich ihrer Binärwerte 0 und 1 auswerten wollte, so ergäbe das für die Binärwerte "0" die Bewertungsamplituden S1 und S6 bzw. S2 und S5 zu den Zeitpunkten t1 bzw. t3. Bezüglich der Binärwerte "1" ergäben sich die Bewertungsamplituden S3 bzw. S4 zum Zeitpunkt t2. Nachdem die Bewertungsamplituden S1, S3 und S5 einerseits und die Bewertungsamplituden S2, S4 und S6 andererseits jeweils gleich sind, also nicht voneinander unterschieden werden können, ist es mit Hilfe einer einfachen Amplitudenbewertung damit nicht möglich, die mit diesen Signalen übertragenen Binärwerte voneinander unterscheiden zu können.

Das in Figur 4 dargestellte Augendiagramm veranschaulicht nun die Verhältnisse, die sich durch den Einsatz der in Figur 1 dargestellten Empfangsschaltung ergeben. Durch die Verwendung des Tiefpaßfilters TP ist dabei erreicht, daß lediglich die den Binärwerten "1" entsprechenden Signalverläufe unverändert, das heißt ohne Bedämpfung den Eingängen der Schwellwert-Auswerteschaltung mit den beiden Fenster-Diskriminatoren FD1 und FD2 zugeführt werden. Die den Binärwerten "0" ent-

sprechenden Signale werden jedoch durch das Tiefpaßfilter TP bedämpft. Ein Vergleich des in Figur 4 dargestellten Augendiagramms mit dem in Figur 3 gezeigten Augendiagramm läßt erkennen, daß es bei den gemäß Figur 4 vorliegenden Verhältnissen nunmehr möglich ist, durch einfache Amplitudenbewertung die Binärwerte "1" von den Binärwerten "0" unterscheiden zu können. Legt man den Pegel-Diskriminatorbereich für den Fenster-Diskriminator FD1 so, wie dies in Figur 4 der Bereich $P_{FD1}$ angibt, kann bei Erreichen bzw. Überschreiten des Pegels SW1, der dem Pegel $+A_2$ entsprechen mag, vom Ausgang a1 des Fenster-Diskriminators FD1 ein "1"-Signal abgegeben werden, welches kennzeichnend ist für das Vorliegen eines Binärwertes "1" in dem zugeführten Datensignal.

Wenn der Diskriminatorbereich des Fenster-Diskriminators FD2 so gelegt wird, wie dies durch den Bereich $P_{FD2}$ in Figur 4 veranschaulicht ist - dieser Diskriminatorbereich $P_{FD2}$ liegt in bezug auf die Mittelachse bzw. Zeitachse t des Augendiagramms symmetrisch zu dem Diskriminatorbereich $P_{FD1}$ - dann gibt der Fenster-Diskriminator FD2 von seinem Ausgang b1 ein "1"-Signal in dem Fall ab, daß der Pegel des eingangsseitig zugeführten Datensignals kennzeichnend ist für einen Binärwert "1". In diesem Fall hat der Pegel des eingangsseitigen Datensignals den in Figur 4 angedeuteten Pegel SW2 erreicht oder überschritten, der dem Pegel $-A_2$ entsprechen mag.

Die vorstehende Betrachtung des in Figur 4 dargestellten Augendiagramms hat somit gezeigt, daß zu den Zeitpunkten t1 und t3 einerseits und zum Zeitpunkt t2 andererseits eindeutig voneinander unterscheidbare Binärwerte des der in Figur 1 dargestellten Empfangsschaltung zugeführten Datensignals erkannt werden können. Dabei dürfte ferner ersichtlich sein, daß vom Ausgang A1 des ODER-Gliedes O1 jeweils dann ein "1"-Signal abgegeben wird, wenn in dem eingangsseitig zugeführten Datensignal ein Binärwert "1" mit einem Pegel von +A oder -A vorhanden ist. Durch Verwendung des Taktes an A4 für die Steuerung der Schieberegisterstufe SR gibt diese vom Ausgangsanschluß A3 schließlich lediglich die gewünschten Binärwerte ab. Durch die Ausnutzung der am Ausgangsanschluß A1 auftretenden "1"-Signale ist andererseits eine sichere Synchronisierung des Taktgenerators Tg erreicht.

Abschließend sei noch angemerkt, daß die Empfangsschaltung gemäß der Erfindung unter Bezugnahme auf Figur 1 mit einer Schwellwert-Auswerteschaltung beschrieben worden ist, zu der die beiden Fenster-Diskriminatoren FD1 und FD2 gehören. Es sei jedoch angemerkt, daß es prinzipiell auch möglich ist, mit nur einem eine Hysteresis zwischen den Pegeln SW1 und SW2 aufweisenden Fenster-Diskriminator FD1 zu arbeiten, wie dies Figur 5 zeigt. Da das Vorzeichen der dem Tiefpaß TP zugeführten "log 1"-Datensignale mit jeder log 1 wechselt, tritt am Ausgang der Schieberegisterstufe SR1 bei jeder "log 1" ein Datenumschlag auf. Dieser Wechsel wird über eine Schieberegisterstufe SR2 und ein Exklusiv-ODER-Glied X1 differenziert, so daß an dem Ausgang A3 wieder das entsprechende binäre Signal (ähnlich BW in Fig. 2) zur Verfügung steht. Am Ausgang A4 steht hier wie bei der Ausführungsform gemäß Figur 1 ein Taktsignal von dem Taktgenerator Tg her zur Verfügung.

3 Patentansprüche
5 Figuren

Patentansprüche

1. Empfangsschaltung für nach einem Coded-Diphase-Verfahren übertragene Datensignale, d a d u r c h g e k e n n z e i c h n e t , daß die Datensignale einem Tiefpaßfilter (TP) zugeführt werden, welches die durch einen Signalpegelübergang in der Mitte eines Codeschrittes gebildeten Signalelemente ("0") gedämpft und die durch einen übergangslosen Signalpegel während eines Codeschrittes gebildeten Signalelemente ("1") ohne Dämpfung an eine Schwellwert-Auswerteschaltung (FD1, FD2) weiterleitet, die die voneinander unterscheidbaren Ausgangspegel (S1, S5, S2, S6; S3, S4) des Tiefpaßfilters (TP) auswertet und damit den Binärwerten der übertragenen Datensignale entsprechende Ausgangssignale abgibt.

2. Empfangsschaltung nach Anspruch 1, d a d u r c h g e k e n n z e i c h n e t , daß die Schwellwert-Auswerteschaltung durch mindestens eine Fenster-Diskriminatorschaltung (z.B. FD1) mit Hystereseverhalten gebildet ist.

3. Empfangsschaltung nach Anspruch 1, d a d u r c h g e k e n n z e i c h n e t , daß die jeweils ein und demselben Binärwert der übertragenen Datensignale entsprechenden Ausgangssignale der vorgesehenen Fenster-Diskriminatoren (FD1, FD2) gemäß einer ODER-Verknüpfungsfunktion zusammengefaßt sind.

## FIG 1

## FIG 2

FIG 3

FIG 4

FIG 5